# EUROPEAN PATENT APPLICATION

(11) **EP 3 550 532 A1**
(43) Date of publication of application: **09.10.2019**
(21) Application number: 18193335.9
(22) Date of filing: 10.09.2018
(51) Int. Cl.: G07F 15/00

(54) **INTELLIGENT ELECTRICITY METER SYSTEM WITH LIGHT WALLET**

(30) Priority: 08.04.2018 CN 201810345219
(71) Applicant: Hepu Technology Development (Beijing) Co. Ltd., 100176 Beijing (CN)
(72) Inventor: Cui, Hua, Beijing (CN); Yang, Yusen, Beijing (CN); Xu, Bo, Beijing (CN); Tan, Zhi, Beijing (CN); Chen, Hui, Beijing (CN)
(74) Representative: Huang, Liwei

(57) **Abstract**

The present invention discloses an intelligent electricity meter system with a light wallet, including a CPU, a metering module, a blockchain light wallet module and a communication module. By using a blockchain light wallet module, the present invention solves the problems that the electricity meter in the prior art cannot implement the peer-to-peer electricity transaction, and electric quantity collection, transaction and recording of the distributed wind photovoltaic and storage battery, and the demand for the energy Internet big data cannot be met. The distributed electricity generation and storage as well as the bi-directional metering of electric energy production and electricity consumption of an electricity user are implemented, such that the electricity quantity of a scattered intelligent microgrid may be metered, transacted and recorded. The distributed electricity generation side and utilization side make the microgrid more feasible economically by taking the intelligent electricity meter as an evidence of transaction charge.

## Description

### FILED OF THE INVENTION

The present invention relates to the field of intelligent electricity meter and blockchain technologies, in particular to an intelligent electricity meter system with a light wallet.

### BACKGROUND OF THE INVENTION

Due to uniqueness of an electric power system, an ultra large network, i.e. power grid, is formed by nature from electricity generation, transmission and distribution to utilization. At its one end, there are traditional energies such as fire coal, fuel gas, nuclear power and hydropower as well as distributed renewable energies such as wind and light, and at the other end, there are millions of high energy consumption power plants, hundreds of millions of power consumers, future intelligent appliances and electromobiles. Various sensors all over the country would generate massive real-time big data even at every microsecond, so as to establish a vast energy Internet.

The energy Internet greatly accelerates the development of future distributed energies. At a power supply side, with a high renewable energy capacity, a random fluctuation of the power supply brings about great challenges to the system. At a load side, due to a change in electric power consumption structures and a rapid development of electromobiles, the randomness and stiffness at the load side are continuously getting serious. Along with an emergency of future energy prosumer buildings, the distributed metering and transaction of energies become mainstream. However, the current centralized grid control mode and the manner of the power grid collecting electricity meter data uniformly are facing great challenges in the future.

In 2009, the emergency of bitcoins brings about subversive achievements---blockchain technologies. As a safe ledger database, the blockchain consists of data blocks. A user may search for data in this always up-to-date platform. For a financing institution, the blockchain may accelerate transaction processing, lower costs, avoid intermediary, improve market insight and increase service transparency.

As an underlying technology for encrypting a bitcoin, the blockchain is a great innovation, and is used for combating fraud and illegal transaction. Recently, the technology of blockchain has found applications in many industries, especially adopting the blockchain as a tool to implement the real energy Internet technologies. The blockchain has the following benefits. Firstly, trust is ensured based on fair data of the blockchain, and privacy is ensured by an access right of combined public and private keys, realizing confidentiality and reliable metering; secondly, the blockchain is tamper-proofing, the cooperative trust or the enforceable trust is realized among main bodies in a certain manner, so as to enable ubiquitous interaction under the enforceable trust; thirdly, the blockchain, together with big data and artificial intelligence, is combined to form a reliable oracle machine, sign external data, and realize virtually interactive self-discipline control; fourthly, based on peer-to-peer interactive decision making among devices deployed by the blockchain, there is no need to put trust in a centralized platform to make a decision, and the decentralization realizes equipment democracy and distributed decision; fifthly, stochastic game is conducted among main bodies based on explicit interaction rules, and the system represents neutral and benign evolution, which conforms to the marketization rules and competitive evolvement harmony and evolvability.

The blockchain is not only used for disintermediation. The blockchain may subvert the market and the existing value chain, and may also create a new market by releasing a supply which is not developed before. The combination of the blockchain with the energy Internet metering system provides reliable technology support for the electricity transaction and metering for future energy Internet.

SPV is an abbreviation of Simplified Payment Verification. In a Satoshi Nakamoto's paper, this concept is simply mentioned, pointing out that the payment can be verified without running all nodes, as long as a user only saves all block headers. Although the user cannot verify the transaction by himself or herself, if a corresponding transaction may be found from a certain place of the blockchain, the user may know that the network has accepted this transaction, and how many acknowledgements from the network is obtained.

According to the Satoshi Nakamoto's paper, it should be noted that the SPV refers to "payment verification", instead of "transaction verification", which are quite different from each other.

The "payment verification" is relatively simple, only judging whether the transaction for "payment" has been verified, and how much hashrate protection (how much acknowledgement number) is obtained.

Theory: there are three key fields in the block header: prev block hash (the hash value of the former block, ensuring the transaction sequence recorded by the blockchain); bits (a calculation difficulty of the current block); and merkle_root_hash (with the merkle tree algorithm, ensuring the authenticity of all transactions in the block).

Advantage: the storage space is saved greatly. The burden of the terminal user is reduced. No matter how large the future trading volume, the size of the block header is constant, only 80 bytes. According to a speed of generating 6 blocks per hour, 52560 blocks are generated each year. When only the block header is saved, the annually increased storage demand is about 4 megabytes, and the accumulated storage demand after 100 years is only 400 megabytes. Even if the user uses a lowest-level device, the load is unaffected completely in normal case.

The light wallet defined by the bitcoin mechanism designed by Satoshi Nakamoto has been introduced in the above. Now, there is emerging a light wallet system based on other digital currencies such as Ethereum and Litecoin, and it is believed that more light wallets with tactical architectures will be designed in the future.

Currently, the conventional intelligent electricity meter is usually to realize the function of paying the electricity bill in advance by the stored-value IC card. However, the real-time electricity transaction or the peer-to-peer electricity transaction cannot be implemented by the current electricity meter technology. With the penetration of the blockchain technology into the energy industry, a user is expecting the emergency of an electricity meter device utilizing the blockchain technology.

### SUMMARY OF THE INVENTION

An object of the present invention is to provide an intelligent electricity meter system with a light wallet, which by using a blockchain light wallet module, solves the problems that the electricity meter in the prior art cannot implement the peer-to-peer electricity transaction, and electric quantity collection, transaction and recording of the distributed wind photovoltaic and storage battery, and the demand for the energy Internet big data cannot be met. The distributed electricity generation and storage as well as the bi-directional metering of electric energy production and electricity consumption of an electricity user are implemented, such that the electricity quantity of a scattered intelligent microgrid may be metered, transacted and recorded. The distributed electricity generation side and utilization side make the microgrid more feasible economically by taking the intelligent electricity meter as an evidence of transaction charge.

In order to realize the above purpose, the present invention adopts the following technical solutions.

An intelligent electricity system with a light wallet, including a CPU, a metering module, a blockchain light wallet module and a communication module, wherein the metering module is connected with the CPU; the blockchain light wallet module is connected with the CPU, the communication module is wirelessly or wiredly connected with the CPU, the metering module, and the blockchain light wallet module respectively, wherein:
the CPU is used for processing and operating data in the intelligent electricity meter, and controlling data exchange;
the metering module is configured to unidirectionally or bi-directionally meter electric quantity;
the blockchain light wallet module performs data interaction with the CPU and an external committer, for implementing the peer-to-peer electricity transaction between nodes of a blockchain network within a region;
the communication module is used for implementing the data transmission between the metering module and the blockchain light wallet module, and the data transmission in the blockchain network.

Preferably, the blockchain light wallet module is provided with a data layer for storing any one or a combination of the following data:
electric quantity transaction data, which is peer-to-peer transaction data in the blockchain related to the electricity meter node;
electricity purchasing and selling identifier, for differentiating binary fields with predetermined meanings of an electricity purchaser and an electricity seller;
time stamp, for recording the time when the peer-to-peer electricity transaction occurs in the blockchain network;
electricity transaction digital currency wallet data, for receiving or paying electricity transaction bill by using a light wallet address and digital currency;
the data layer is further used for sealing a time stamp on electricity purchasing and selling transaction data generated at the electricity meter node, so as to form a data block and record the same in the blockchain in the temper-proofing manner.

Preferably, the electricity purchasing and selling identifier includes a binary field with a predetermined meaning;
the binary field represents the current node by a first set value as the electricity seller, and represents the current node by the second set value as the electricity purchaser.

Preferably, the blockchain light wallet module includes an encryption management unit, for encrypting data in a hardware or software encryption manner, and for managing the encrypted information of the user.

Preferably, the blockchain light wallet module is provided with a module with a function of digital currency storage or pre-stored expense, and the user may pay the electricity bill in advance by the digital currency, and store in the blockchain light wallet module.

Preferably, the blockchain light wallet module may download block header information, thereby obtaining all transaction block information corresponding to a wallet key by making a data request to nodes of an entire grid in a peer-to-peer manner.

Preferably, the light blockchain light wallet module is further used for giving a unique ID to each intelligent electricity meter, so as to form a node with a unique ID in the blockchain.

Preferably, the blockchain network corresponding to the blockchain light wallet module may be a public blockchain, a consortium blockchain or a private blockchain;
all or partial nodes of the private blockchain or the consortium blockchain have complicated reading, writing and accounting permissions.

Preferably, the present invention further includes:
a communication interface, connected with the CPU, the metering module and the blockchain light wallet module, for data transmission.

Preferably, the communication interface is one or a combination of RS485 communication, RFID, Bluetooth, WIFI, 3G network, 4G network, 5G network or power line carrier.

The present invention further provides an operating method of the intelligent electricity meter system with a light wallet, including the following steps:
S1 metering, by a metering module in an electricity meter, an electricity consumption or production of different buildings or devices, and sending the electricity metering data to the CPU in the electricity meter;
S2 processing and operating, by the CPU, the data in the intelligent electricity meter, and performing data interaction with the blockchain light wallet module by the communication module;
S3 storing, in a data layer of the blockchain light wallet module, any one or a combination of following data: electricity transaction data, electricity purchasing and selling identifier, time stamp, electricity transaction digital currency wallet data;
S4 sealing, by the data layer, a time stamp on the electricity purchasing and selling transaction data generated by the intelligent electricity meter node, forming a data block and recording in the blockchain in a tamper-proofing manner, downloading block header information, making a data request to the nodes of the entire grid in a peer-to-peer manner, thereby obtaining all transaction block information corresponding to the wallet key;
S5 giving, by the blockchain light wallet module, a unique ID to each of the intelligent electricity meters, so as to form a node with a unique ID in the blockchain;
S6 finishing, by the blockchain light wallet module, the peer-to-peer electricity transaction between nodes of the blockchain network within the region, and transmitting the data processed by the blockchain light wallet module to the blockchain network by the CPU and the communication interface.

In the specific engineering practice, there are two different solutions depending on a new project or a reconstructive project. For the reconstructive project, the blockchain router (provided with the above-mentioned blockchain light wallet module and the communication module) is added on the conventional intelligent electricity meter (including the above-mentioned CPU, the metering module, and the communication module), so as to realize the blockchain light wallet function; for the new project, the intelligent electricity meter integrated therein with the above-mentioned blockchain light wallet module may be mounted directly (this intelligent electricity meter has the above-mentioned CPU, the metering module, and the communication module).

Further, the present invention further includes an intelligent electricity meter system, including a conventional intelligent electricity meter and a blockchain router, wherein the conventional intelligent electricity meter is provided with the CPU, the metering module and the communication module, and the blockchain router is provided therein with the blockchain light wallet module and the communication module.

The present invention includes an electricity meter having the above-mentioned intelligent electricity meter system with a light wallet, including the intelligent electricity meter integrated with the blockchain light wallet module, and the intelligent electricity meter integrated with the blockchain light wallet module is further provided with the CPU, the metering module and the communication module.

The present invention has the advantageous effects as follows.

By using a blockchain light wallet module, the present invention solves the problems that the electricity meter in the prior art cannot implement the peer-to-peer electricity transaction, and electric quantity collection, transaction and recording of the distributed wind photovoltaic and storage battery, and the demand for the energy Internet big data cannot be met. The distributed electricity generation and storage as well as the bi-directional metering of electric energy production and electricity consumption of an electricity user are implemented, such that the electricity quantity of a scattered intelligent microgrid may be metered, transacted and recorded. The distributed electricity generation side and utilization side make the microgrid more feasible economically by taking the intelligent electricity meter as an evidence of transaction charge.

### BRIEF DESCRIPTION OF THE DRAWINGS

Figure 1 is an architectural diagram of an intelligent electricity meter system with a light wallet according to the first embodiment of the present invention;
Figure 2 is an architectural schematic diagram of a blockchain electricity transaction network according to the first embodiment of the present invention; and
Figure 3 is an architectural diagram of an intelligent electricity meter with a light wallet according to the second embodiment of the present invention.

Reference numerals: 100 intelligent electricity meter, 101 CPU, 102 metering module, 103 blockchain light wallet module, 104 communication interface, 105 digital signal module, 106 protocol interface module, 107 power supply module, 108 display module, 109 clock module, 200 blockchain network, 300 conventional intelligent electricity meter, 400 blockchain router.

### DETAILED DESCRIPTION OF THE EMBODIMENTS

The present invention will be further described in combination with drawings. It should be noted that the embodiment provides detailed implementation modes and specific operation process by taking the present technical solution as a premise. However, the protection scope of the present invention is not limited the present embodiment.

### First embodiment

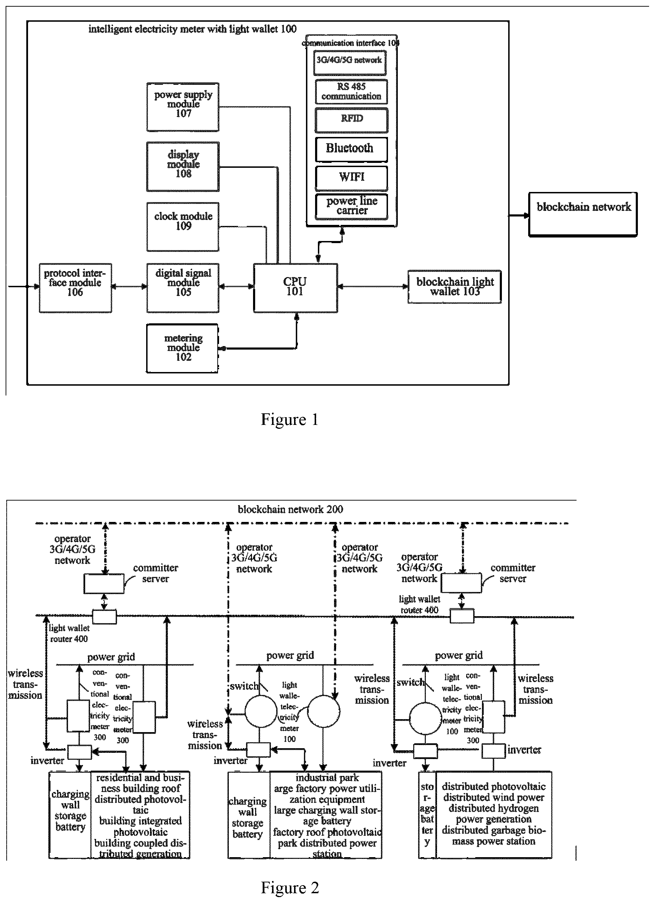

With reference to Figures 1 and 2, the present invention provides an intelligent electricity meter system with a light wallet, including: a CPU 101, a metering module 102, a blockchain light wallet module 103 and a communication module 104, wherein
the CPU 101 is used for processing and operating data in the intelligent electricity meter 100, and controlling data exchange;
the metering module 102 is connected with the CPU 101, for unidirectionally or bi-directionally metering electric quantity;
the blockchain light wallet module 103 is connected with the CPU 101, and performs data interaction with the CPU 101;
the communication module 104 is wirelessly or wiredly connected to the CPU 101, the metering module 102, and the blockchain light wallet module 103 respectively, for implementing the data transmission between the metering module 102 and the blockchain light wallet module 103, and the data transmission in the blockchain network 200.

In the present embodiment, the blockchain light wallet module 103 includes an encryption management unit, for encrypting data in a hardware or software encryption manner, and for managing the encrypted information of the user.

In the present embodiment, the blockchain light wallet module 103 has a function of digital currency storage or pre-stored expense, and the user may pay the electricity bill in advance by the digital currency, and store in the blockchain light wallet module.

In the present embodiment, the present invention further includes: a communication interface, which is connected with the CPU 101, the metering module 102 and the blockchain light wallet module 103, for data transmission.

In the present embodiment, the communication interface is one or a combination of RS485 communication, RFID, Bluetooth, WIFI, 3G network, 4G network, 5G network or power line carrier. However, the present invention is not limited thereto. The communication interface may be of other forms.

The wireless communication of the building at the bottom layer adopts the RF wireless transmission technology, and its stability, security and confidentiality are more reliable, which ensures the stable operation of the charging and metering system.

With reference to Figure 2, in the present embodiment, the intelligent electricity meter 100 further includes a digital signal module 105, a protocol interface module 106, a power supply module 107, a display module 108 and a clock module 109.

The digital signal module 105 is connected with the CPU 101.

The protocol interface module 106 is connected with the CPU 101.

The power supply module 107 is connected with the CPU 101.

The display module 108 is connected with the CPU 101, including a liquid crystal display screen. However, the present invention is not limited thereto. The display screen may be of other forms.

The clock module 109 is connected with the CPU 101.

The constituent components of the intelligent electricity meter system with a light wallet according to the present embodiment include, but not limited to the above-mentioned components, further including other essential components of the conventional electricity meter.

When the intelligent electricity meter system according to the present embodiment is running, the data layer of the blockchain light wallet module 103 stores any one or a combination of the following data:
electric quantity transaction data, which is peer-to-peer transaction data in the blockchain related to the electricity meter node;
electricity purchasing and selling identifier, for differentiating binary fields with predetermined meanings of an electricity purchaser and an electricity seller;
time stamp, for recording the time when the peer-to-peer electricity transaction occurs in the blockchain network;
electricity transaction digital currency wallet data, for receiving or paying electricity transaction bill by using a light wallet address and digital currency;
wherein the electricity purchasing and selling identifier refers to a binary field with a predetermined meaning;
the binary field represents the current node by a first set value as the electricity seller, and represents the current node by the second set value as the electricity purchaser.

Preferably, the electricity purchasing and selling identifier includes a binary field with a predetermined meaning;
the binary field takes a first set value to represent the current node as the electricity selling party, the second set value to represent the current node as the electricity purchasing party.

When the intelligent electricity meter system according to the present embodiment is running, the data layer seals a time stamp on the electricity purchasing and selling transaction data generated at the electricity meter node, so as to form a data block and record the same in the blockchain in the temper-proofing manner. The blockchain light wallet module would download block header information, thereby obtaining all transaction block information corresponding to a wallet key by making a data request to nodes of an entire grid in a peer-to-peer manner.

When the intelligent electricity meter system according to the present embodiment is running, the blockchain light wallet module 103 finishes the peer-to-peer electricity transaction between nodes of the blockchain network within the region, and transmits the data processed by the blockchain light wallet module 103 to the blockchain network 200 by the CPU 101 and the communication interface.

When the intelligent electricity meter system according to the present embodiment is running, the blockchain light wallet module 103 would give a unique ID to each of the intelligent electricity meters 100, so as to form a node with a unique ID in the blockchain.

When the intelligent electricity meter system according to the present embodiment is running, the digital signal module 105 collects the digital signal or the analog signal of the metering module 102, and converts the analog signal into the digital signal.

When the intelligent electricity meter according to the present embodiment is running, the protocol interface module 106 manages the communication protocol interface and receives the data input outside.

When the intelligent electricity meter according to the present embodiment is running, the power supply module 107 provides a working power for the intelligent electricity meter 100.

When the intelligent electricity meter according to the present embodiment is running, the display module 108 displays related data.

When the intelligent electricity meter according to the present embodiment is running, the clock module 109 provides an operation clock for the CPU 101.

### Second embodiment

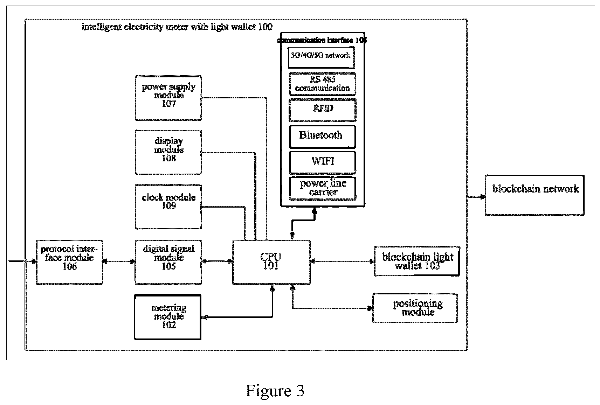

With reference to Figure 3, the present embodiment differs from the first embodiment in that the intelligent electricity meter 100 according to the second embodiment further includes a positioning module, connected with the CPU 101, for positioning the intelligent electricity meter 100.

When the intelligent electricity meter according to the present embodiment is running, the geographic position information of the blockchain node is obtained by the positioning module positioning the intelligent electricity meter 100, which realizes the geographic position informatization of the entire intelligent power grid, thereby laying a foundation for the optimal rationalization of the peer-to-peer automatic electricity transaction of the blockchain. That is, in the blockchain intelligent contract, it can be appointed that in case of the same quotation, preferably, the electricity transaction between the two nearest nodes geographically is facilitated, which leads to the lowest electricity transmission costs and consumption.

In the present embodiment, the positioning module adopts a GIS geographic information locating chip.

The intelligent electricity meter 100 according to the present embodiment has the same structure, composition and connection relationship as in the first embodiment, and they are not repeated herein.

### Third embodiment

The present embodiment provides an intelligent electricity meter system, including a conventional intelligent electricity meter 300 and a blockchain router 400, wherein the conventional intelligent electricity meter 300 is provided therein with the CPU 101, the metering module 102 and the communication module 104, and the blockchain router 400 is provided therein with the blockchain light wallet module 103 and the communication module 104.

In the present embodiment, each module of the intelligent electricity meter system has the same function and operation manner as in the first embodiment, and they are not repeated herein.

### Fourth embodiment

The present embodiment provides an electricity meter having the above-mentioned intelligent electricity meter system with a light wallet according to the first embodiment, including the intelligent electricity meter 100 integrated with the blockchain light wallet module 103, and the intelligent electricity meter 100 is further provided with the CPU 101, the metering module 102 and the communication module 104.

In the present embodiment, each module of the electricity meter has the same function and operation manner as in the first embodiment.

According to the above-mentioned technical solution and conception, persons skilled in the art make various corresponding changes and alternations which should fall within the protection scope of the claims of the present invention.

## Claims

1. An intelligent electricity system with a light wallet, comprising a CPU (101), a metering module (102), a blockchain light wallet module (103) and a communication module (104), wherein the metering module (102) is connected with the CPU (101); the blockchain light wallet module (103) is connected with the CPU (101), the communication module (104) is wirelessly or wiredly connected with the CPU (101), the metering module (102), and the blockchain light wallet module (103) respectively, wherein:
the CPU (101) is used for processing and operating data in the intelligent electricity meter (100), and controlling data exchange;
the metering module (102) is configured to unidirectionally or bi-directionally meter electric quantity;
the blockchain light wallet module (103) performs data interaction with the CPU (101) and an external committer, for implementing the peer-to-peer electricity transaction between nodes of a blockchain network (200) within a region;
the communication module (104) is used for implementing the data transmission between the metering module (102) and the blockchain light wallet module (103), and the data transmission in the blockchain network (200).

2. The intelligent electricity system with a light wallet according to claim 1, wherein the blockchain light wallet module (103) is provided with a data layer for storing any one or a combination of the following data:
electric quantity transaction data, which is peer-to-peer transaction data in the blockchain related to the electricity meter node;
electricity purchasing and selling identifier, for differentiating binary fields with predetermined meanings of an electricity purchaser and an electricity seller;
time stamp, for recording the time when the peer-to-peer electricity transaction occurs in the blockchain network;
electricity transaction digital currency wallet data, for receiving or paying electricity transaction bill by using a light wallet address and digital currency;
the data layer is further used for sealing a time stamp on electricity purchasing and selling transaction data generated at the electricity meter node, so as to form a data block and record the same in the blockchain in the temper-proofing manner.

3. The intelligent electricity system with a light wallet according to claim 2, wherein the electricity purchasing and selling identifier includes a binary field with a predetermined meaning;
the binary field represents the current node by a first set value as the electricity seller, and represents the current node by the second set value as the electricity purchaser.

4. The intelligent electricity system with a light wallet according to claim 1, wherein the blockchain light wallet module (103) comprises an encryption management unit, for encrypting data in a hardware or software encryption manner, and for managing the encrypted information of the user.

5. The intelligent electricity system with a light wallet according to claim 1, wherein, the blockchain light wallet module (103) is provided with a module with a function of digital currency storage or pre-stored expense, and the user may pay the electricity bill in advance by the digital currency, and store in the blockchain light wallet module (103).

6. The intelligent electricity system with a light wallet according to claim 1, wherein the blockchain light wallet module (103) downloads block header information, thereby obtaining all transaction block information corresponding to a wallet key by making a data request to nodes of an entire grid in a peer-to-peer manner.

7. The intelligent electricity system with a light wallet according to claim 1, wherein the light blockchain light wallet module (103) is further used for giving a unique ID to each intelligent electricity meter (100), so as to form a node with a unique ID in the blockchain.

8. The intelligent electricity system with a light wallet according to claim 1, wherein the blockchain network corresponding to the blockchain light wallet module (103) may be a public blockchain, a consortium blockchain or a private blockchain;
all or partial nodes of the private blockchain or the consortium blockchain have complicated reading, writing and accounting permissions.

9. The intelligent electricity system with a light wallet according to claim 1, further comprising: a communication interface, connected with the CPU (101), the metering module (102) and the blockchain light wallet module (103), for data transmission.

10. The intelligent electricity system with a light wallet according to claim 9, wherein the communication interface is one or a combination of RS485 communication, RFID, Bluetooth, WIFI, 3G network, 4G network, 5G network or power line carrier.

11. An intelligent electricity meter system, comprising a conventional intelligent electricity meter (300) and a blockchain router (400), wherein the conventional intelligent electricity meter (300) is provided with the CPU (101), the metering module (102) and the communication module (104), and the blockchain router (400) is provided therein with the blockchain light wallet module (103) and the communication module (104).

12. An electricity meter having the intelligent electricity meter system with a light wallet according to any one of claims 1-10, comprising the intelligent electricity meter (100) integrated with the blockchain light wallet module (103), and the intelligent electricity meter (100) integrated with the blockchain light wallet module (103) is further provided with the CPU (101), the metering module (102) and the communication module (104).

13. An operating method of the intelligent electricity meter system with a light wallet according to any one of claims 1-10, comprising the following steps:
S1 metering, by a metering module in an electricity meter, an electricity consumption or production of different buildings or devices, and sending the electricity metering data to the CPU in the electricity meter;
S2 processing and operating, by the CPU, the data in the intelligent electricity meter, and performing data interaction with the blockchain light wallet module by the communication module;
S3 storing, in a data layer of the blockchain light wallet module, any one or a combination of following data: electricity transaction data, electricity purchasing and selling identifier, time stamp, electricity transaction digital currency wallet data;
S4 sealing, by the data layer, a time stamp on the electricity purchasing and selling transaction data generated by the intelligent electricity meter node, forming a data block and recording in the blockchain in a tamper-proofing manner, downloading block header information, making a data request to the nodes of the entire grid in a peer-to-peer manner, thereby obtaining all transaction block information corresponding to the wallet key;
S5 giving, by the blockchain light wallet module, a unique ID to each of the intelligent electricity meters, so as to form a node with a unique ID in the blockchain;
S6 finishing, by the blockchain light wallet module, the peer-to-peer electricity transaction between nodes of the blockchain network within the region, and transmitting the data processed by the blockchain light wallet module to the blockchain network by the CPU and the communication interface.
